# EUROPEAN PATENT SPECIFICATION

(11) **EP 3 722 136 B1**
(45) Date of publication and mention of the grant of the patent: **08.06.2022**
(21) Application number: 19168172.5
(22) Date of filing: 09.04.2019
(51) Int. Cl.: B60K 35/00, B60K 37/04, B60R 11/00, B60R 11/02, B60R 21/05, B62D 1/19

(54) **DISPLAY IN STEERING WHEEL RIDE DOWN**
ANZEIGE IN EINEM NACH UNTEN GENEIGTEN LENKRAD
AFFICHAGE EN RENVERSÉE DE VOLANT DE DIRECTION

(43) Date of publication of application: 14.10.2020
(73) Proprietor: Volvo Car Corporation, 40531 Göteborg (SE)
(72) Inventor: GÖTHLIN, Jonas, SE-423 43 TORSLANDA (SE); GUSTAFSSON, Magnus, SE-442 96 KODE (SE); SVENSSON, Daniel, SE-429 44 SÄRÖ (SE)
(74) Representative: Kransell & Wennborg KB

(56) References cited:
- EP-A1- 3 045 340
- DE-A1-102016 004 156
- US-A1- 2009 085 338
- US-A1- 2012 072 072

## Description

The present invention relates to a display device attachable behind a steering wheel of a vehicle.

### BACKGROUND

Todays vehicles are becoming increasingly advanced with regards to safety, both in terms of the structure of the vehicle and control functions for the vehicle. Most modern vehicles are for example equipped with air bag systems which are triggered in the event of a collision with sufficient magnitude.

In the event of a collision it is desirable that the steering column can move away from the driver in order to reduce the effect of an impact between the driver and the steering wheel. For allowing such motion of the steering wheel most vehicles are equipped with a so-called ride down mechanism, i.e. a mechanism which enables for the steering wheel to move away from the driver in the event of a collision. The ride down mechanism often relies on the forces generated in the collision.

For the ride down mechanism to efficiently reduce the risk of injury to occupants, the ride-down length has to be of sufficient length to move the steering wheel and steering column away from the driver. However, with new developments for displays and other equipment, it has been proposed to arrange for example displays behind the steering wheel. This may compromise the ride-down mechanism by for example limiting the possible ride-down length. US 2009/0085338 discloses a prior art structure of a vehicle instrument panel. Further, DE102016004156 discloses a prior art holding arrangement of a display device. Still further, EP3045340 discloses a prior art on vehicle display device, and US2012/072072 discloses a prior art information display for a vehicle.

Accordingly, there is a need for a solution which allows for mounting devices behind the steering wheel without compromising the ride down length.

### SUMMARY

In general, the disclosed subject matter relates to a display device attachable at an attachment point behind a steering wheel. The display device is configured to break at a predetermined break portion in the event of a ride-down of the steering wheel such that the display device does not prevent the ride down motion.

To achieve this advantage, the inventors realized to provide the display device with a break portion at which the display device breaks when the steering column has moved sufficiently far. When the break portion breaks, a main body of the display device is detached from the attachment point such that the steering column may move unhindered in the event of a ride down motion.

Accordingly, the proposed display device may advantageously be attached to the steering column behind the steering wheel while still allowing for the desired ride down motion of the steering wheel in the event of a collision.

More specifically, the main body of the display device may be attached to the steering column by an attachment portion of the display device. The attachment portion is coupled to the main body of the display device via the break portion. When the break portion breaks because of an excessive motion of the steering wheel, the main body detaches from the attachment portion and the steering wheel may continue its ride down motion.

In one embodiment, the display device is adapted to break at the predetermined break portion as a result of the display device colliding with a stoppage member arranged behind the display device.

Accordingly, with the stoppage member arranged behind the display device, in the event of a ride down of the steering wheel, the display device which may be attached to the steering column collides at a predetermined area of the main body of the display device with the fixed stoppage member. The force in the collision causes a bending and/or sheer torque on the predetermined break portion such that it breaks and thereby detaches the main body of the display device from the attachment point.

In one embodiment, after breakage, the main body of the display device is prevented from reaching a driver position by motion limitation means. In other words, to prevent the detached main body from injuring occupants of the vehicle, a motion limitation means is included which limits the motion of the main body of the display device to within the vicinity of e.g. the steering column such that the main body may not reach the occupants of the vehicle.

Further features of, and advantages with, the present invention will become apparent when studying the appended claims and the following description.

### BRIEF DESCRIPTION OF DRAWINGS

These and other aspects of the present invention will now be described in more detail, with reference to the appended drawings showing example embodiments of the invention, wherein:
FIG. 1 conceptually illustrates a display device attached behind a steering wheel before a movement of the steering wheel has begun;
FIG. 2 conceptually illustrates the display device attached behind the steering wheel in fig. 1 when the display device hits a stoppage member;
FIG. 3 conceptually illustrates the display device in fig. 1 and fig. 2 when the main body of the display has detached;
FIG. 4 conceptually illustrates a display device according to example embodiments of the present invention;
Fig. 5A conceptually illustrates a display device assembly according to example embodiments of the present invention;
Fig. 5B conceptually illustrates the display device assembly in fig. 5B when the display device has hit a stoppage member;
Fig. 6 conceptually illustrates a display device assembly according to example embodiments of the present invention;
FIG. 7 conceptually illustrates a display device according to example embodiments of the present invention; and
FIG 8A-B illustrate an example attachment of a display device to an attachment point behind a steering wheel.

### DETAILED DESCRIPTION

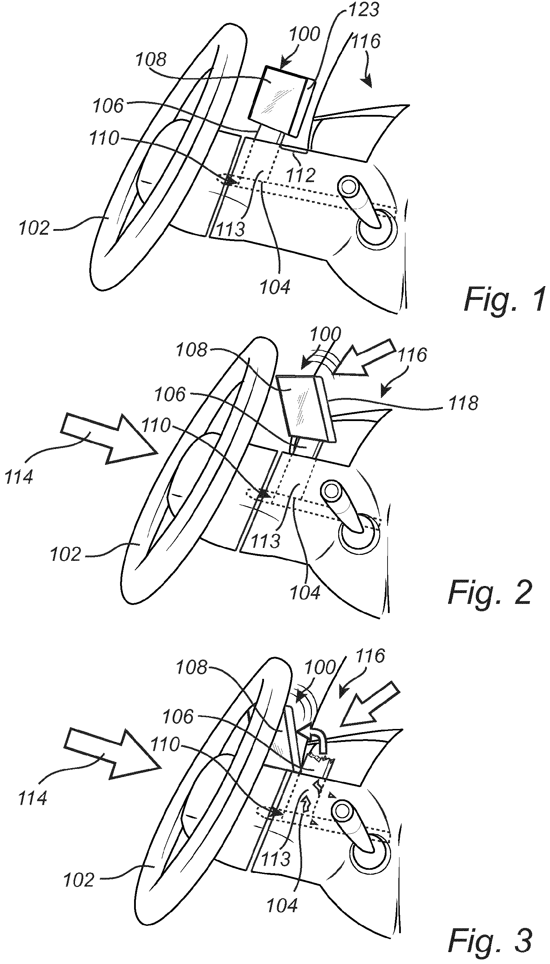

Fig. 1 conceptually illustrates a display device 100 attachable at an attachment point 104 behind a steering wheel 102 of a vehicle. The display device 100 is configured to break at a predetermined break portion 106 to thereby detach a main body 108 of the display device 100 from the attachment point 104 in the event that a steering column 110 attached to the steering wheel is displaced further than a predetermined distance 112.

The inventors have realized that in order to be able to attach a display behind the steering wheel and at the same time allow for the steering column to move in a so-called ride down motion in the event of a collision without being hindered by the display device, it is advantageous to construct the display device in a such a way that it breaks off from its attachment once the steering column has moved sufficiently far. For this, the display device comprises a break portion which is configured to break when the steering column has moved the predetermined distance such that the main body of the display device is detached from the attachment point.

The location of the display device behind the steering wheel is convenient since the driver may view the display without having to look away to the side, as would be the case with a centre mounted display in the vehicle compartment adjacent to the steering wheel. Thus, the display location just behind the steering wheel provides for a less distracting action by the driver when in need of receiving information from the display.

It should be understood that the main body of the display device may be detached from the attachment point on the steering column in various ways, including using a control functionality triggered by the detection of a collision, in a similar manner to an air bag system. When the collision is detected, by for example detecting a large deceleration using e.g. accelerometers, or generally an inertial measurement unit of the vehicle, a detachment mechanism may detach the main body of the display from the attachment point. However, although this type of solution is possible and within the scope of the claims, a more convenient, more reliable, and less costly solution relates to allowing the display device to collide with an object in the vehicle, and utilize the force applied on the display device to break the break portion such that the main body of the display device is detached from the attachment point. This solution will be described in more detail below.

Figs. 1-3 illustrate a sequence where the display device 100 is detached from the steering column 110. In Fig. 1, the display device 100 is attached to the steering column 110 at an attachment point 104.

The display device 100 may comprise an attachment portion 113 configured to attach the main body 108 of the display device 100 to the steering column 110 via the predetermined break portion 106. The attachment portion 113 may for example include a bracket with holes through which screws or bolts may be inserted and tightened to corresponding threaded mounting holes in the steering column or surrounding components such as a steering module.

The attachment portion 113 is configured to attach the main body 108 of the display device to the attachment point 104 in such a way that the attachment portion 113 of the display device is fixed in relation to the steering column 110.

According to the above, the display device 100 is in any way arranged such that it follows the translational motion of the steering column 110, in the event of a ride down motion, as will be described below.

Fig. 2 illustrates an initial ride-down motion of the steering wheel 102. In fig. 2, the vehicle may have collided with an object, and as a result of the collision, the steering wheel 102 and the steering column 110 has begun to move forward, as indicated by the arrow 114. Once the steering column 110 has moved the predetermined distance 112, the display device 100 main body 108 hits a stoppage member 116. The stoppage member 116 hits the back side 118 of the display device's 100 main body 108. The attachment portion 113 is fixed in relation to the steering column, which means in a ride down movement the attachment portion 113 follows the ride down motion at the same time as the motion of the main body 108 is interrupted by the stoppage member such as the instrument panel 116.

The predetermined distance 112 that the steering column 110 has moved is here understood to be the distance between the back side 118 of the display device 100 main body 108 and the stoppage member 116.

In this example embodiment, the stoppage member 116 is the instrument panel 116 of the vehicle. However, the stoppage member may equally well be a specifically mounted stoppage member, such as a bar, beam, sphere, or another object. The stoppage member is selected based on the specific interior design of the vehicle compartment and what objects are present behind the main body 108 of the display device 100 and the location of such objects.

For example, in case the location of the instrument panel is such that the display device 100 is detached at the predetermined break portion in a reliable way, there is no need for a specifically mounted stoppage member. However, in cases where the display device 100 does not naturally hit the instrument panel or another component already present in the vehicle interior behind the display device 100, a specifically mounted stoppage member may be installed. It may for example be the case that the display device 100 is not high enough to reach the instrument panel.

As explained, in fig. 2 the display device's 100 main body 108 hits the instrument panel 116 but has not yet detached from the attachment point 104.

In fig. 3, the steering column 110 has moved further than the predetermined distance, and consequently the main body 108 of the display device 100 breaks off from the attachment point 104 by a disruption at the predetermined break portion 106 caused by the impact of the main body 108 with the instrument panel 116. Advantageously, the steering column 110 is allowed to follow through the entire ride-down motion as intended.

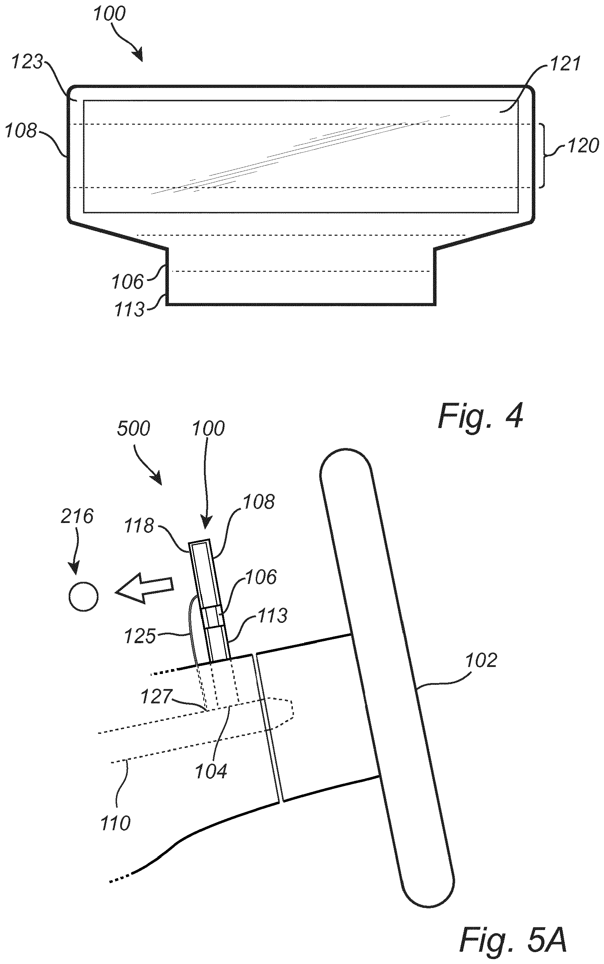

Fig. 4 illustrates a display device 100 comprising a main body 108 including a display 121. The display 121 may be of any known type of display such as LED, LCD, OLED, etc. The display 121 may be configured to display information to the driver derived from e.g. navigation systems, maps, entertainment system, infotainment system, etc.

The display device 100 comprises an attachment portion 113 connected to the main body 108 of the display device 100 via the predetermined break portion 106 comprised in the display device 100. The break portion 106 is configured to break when it is subjected to a sufficiently large bending and/or sheer torque. The break portion 106 may be mechanically weaker than attachment portion 113 and the main body 108. The attachment portion 113 is fixed in relation to the steering column, which means in a ride down movement the attachment portion 113 follows the ride down motion at the same time as the motion of the main portion 108 is interrupted by the stoppage member such as the instrument panel 116 in figs. 1-3, colliding with back side 118 of the main body 108. This causes a shear torque and/or a bending torque on the break portion 106 which breaks when the torque is of sufficient magnitude.

The break portion 106 is here indicated by dashed lines. There are various ways to enable a predetermined break portion 106.

For example, the break portion 106 may be made in a different material than the rest of the display device. For example, a display device frame 123 may be cast in one plastic material and the break portion 106 may be cast in a different material which is more brittle than the plastic material of the frame 123. The break portion 106, the frame 123, and the attachment portion 113 may subsequently be mounted together by various techniques such as welding methods, or suing screws, rivets, glue, or any other similar technique. Even if the material of the break portion 106, the frame 123, and the attachment portion 113 is the same, a joint (made through e.g. gluing or welding) between the frame 123 and the break portion 106 would also enable a structurally weakened portion where the break may occur.

Another possibility is to structurally weaken the break portion 106 by forming e.g. grooves, holes, or any type of dents to the material of the break portion 106. Thus, the predetermined break portion may generally be a structurally weakened portion of the display device. In the embodiment shown in fig. 4, the break portion 106 is made narrower than the main body 108. The break portion 106 is partly tapered in this shown example, but this is not strictly required. However, that the break portion 106 is made narrower than the main body 108 also means it breaks more easily than the main body 108.

In addition, in order to ensure that the display device 100 breaks at the break portion, it is also advantageous to configure the display device 100 such that the stoppage member 116 hits the back side of the display device 100 at a spot which provides sufficient shear torque and/or a bending torque to the break portion 106 for a given impact force on the display device.

The area 120 indicated in fig. 4, shows an approximate example preferred hit area 120. The force applied by a stoppage member on the displace device in the event of a sufficient ride down that exceeds the predetermined distance 112 can be at least roughly estimated. Based on this, the display device 100 and the stoppage member can be configured such that the stoppage member hits the main body 108 in a hit area appropriate for the break portion 106 to break when the display device hits the stoppage member. However, as long as the hit area 120 is above the break portion 106, i.e. as long as the hit area is on the opposite side of the break portion compared to the attachment portion 113, it is possible to tune the mechanical strength of the break portion to properly break in the event of a ride down movement.

Fig. 5A conceptually illustrates a display device assembly 500 for use in a vehicle. The display device assembly comprises a display device 100 attached behind a steering wheel 102 of a vehicle at an attachment point 104. The display device 100 is configured to break at a predetermined break portion 106 to thereby detach a main body 108 of the display device from the attachment point 104 in the event that a steering column of the steering wheel is displaced further than a predetermined distance. Further, a stoppage member 216 is arranged behind the display device 100. The display device 100 is adapted to break at the predetermined break portion 106 as a result of the display device colliding with the stoppage member 216.

In one preferred embodiment, a motion limitation means is adapted to prevent the main body 108 of the display device from reaching a driver position after breakage. The motion limitation means may be a strap 125 attached to the main body 108 of the display device on one end and to the attachment portion 113, or a steering wheel module, or the steering column 110 on the other end. The length of the strap is adapted such that the main body 108 of the display device cannot reach the driver position. The strap may be made from any suitable material, e.g. fabric, plastic, metal, etc.

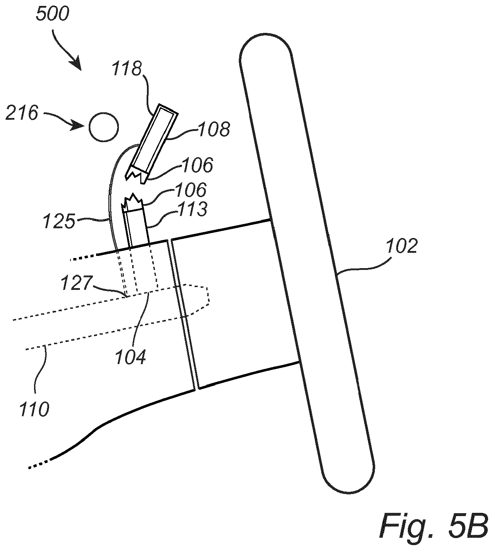

When the main body 108 hits the stoppage member 216 as shown in fig. 5B, and the break portion 106 breaks, the main body 108 is detached from the attachment portion 113, at the break portion 106, i.e. the main body 108 moves freely in the vehicle compartment. However, with the strap 125, the main body may not move further from point 127 where the strap is attached than the length of the strap 125.

The display device 100 is adapted to be attached to the steering column 110 of the vehicle. Thus, a distance between the steering wheel 102 and the display device is fixed during a ride down motion of the steering column 110, before the display device is broken at the predetermined break portion.

The motion limitation means are here only conceptually shown for illustrating the function and the specific arrangement and attachment for the motion limitation means will depend on the specific design of the steering wheel arrangement of the vehicle.

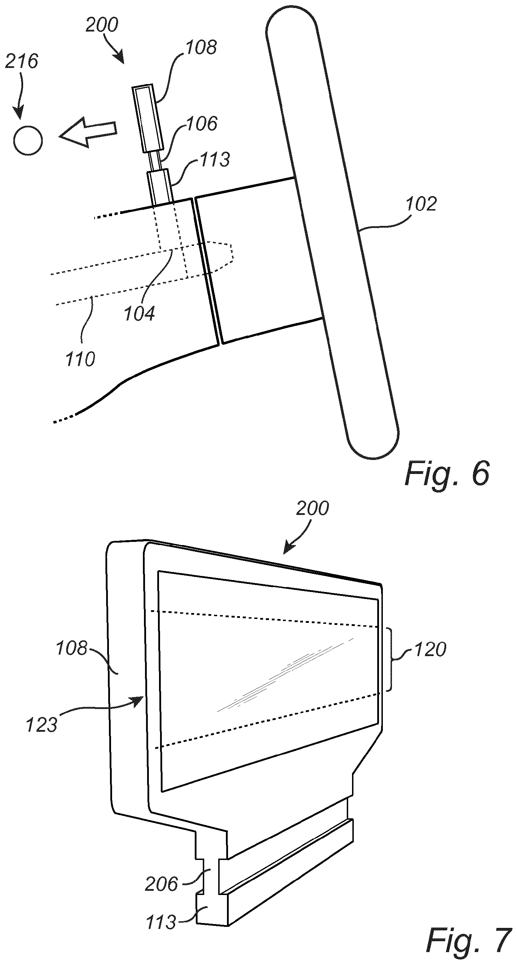

Fig. 6 and fig. 7 illustrate another possibility for enabling a structurally weakened break portion 106 for a display device 200. Here the display device frame 123, the break portion 206, and the attachment portion 113 may be made in one piece, e.g. by casting. However, the break portion 206 is made thinner than the display device frame 123 and the attachment portion 113, which results in a structurally weakened break portion 206 compared to the strength of the display device frame 123 and the attachment portion 113.

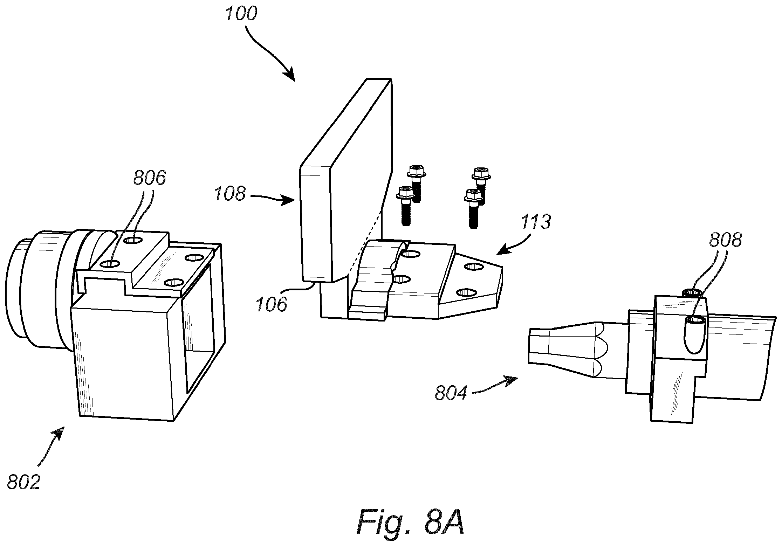

Fig. 8A illustrates a steering arrangement comprising a steering module 802, a steering column 802, and a display device according to any of the herein described embodiments, but here denoted 100. The steering module 802 is configured as a link between the steering wheel (not shown in fig. 8A) and the steering column 804 and often includes switches such as for operating windshield wipers, direction indicators, and other electronic or mechatronic control devices. The display device 100 comprises the main body 108 connected to the attachment portion 113 via the predetermined break portion 106.

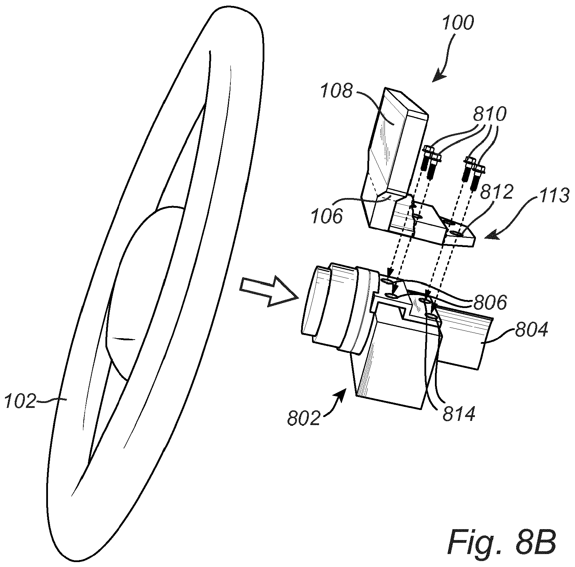

The steering module 802 includes attachment holes 806 and the steering column 804 includes attachment holes 808 for the attachment of the display device 100 behind the steering wheel. Turning now to fig. 8B which illustrates the steering arrangement with the steering module 802 engaged with the steering column 804, and the display device 100 attachable behind the steering wheel 102, here shown detached from the steering module 802 for clarity in the drawing. The screws or bolts 810 are adapted to be arranged through the assembly holes 812 of the attachment portion 113 and tightened in the threaded attachment holes 806 in the steering module 802 and in the holes 808 (see fig. 8A) in the steering column 804. In this way, the display device 100 is firmly attached to follow any translational movement of the steering column 804. The screws or bolts 810 tightened in the threaded attachment holes 808 are here shown to also be arranged through the attachment holes 814 of the steering module, although this will depend on the specific design of a steering module and steering column in a vehicle and is not *per se* a requirement.

If a motion limitation means is included it may be attached to the main body 108 of the display device on one end and to the attachment portion 113, or the steering wheel module 802, or the steering column 804 on the other end. The length of the motion limitations means is adapted such that the main body 108 of the display device cannot reach the driver position when the main body is detached from the attachment portion 113. The motion imitation means may be a strap, a string, a ribbon, etc, and may be made from any suitable material, e.g. fabric, plastic, metal, etc.

The person skilled in the art realizes that the present invention by no means is limited to the preferred embodiments described above. On the contrary, many modifications and variations are possible within the scope of the appended claims.

For example, the dimensions of the ride down distance and the relative locations of the display device and the instrument panel in figs 1-3 are not necessarily to scale. The drawings are intended to show the working principle of the display device in the event of a collision with the vehicle that causes a ride down of the steering column. The display device may for example be arranged less than 10 mm from the stoppage member.

Various examples have been described. These and other examples are within the scope of the following claims.

## Claims

1. A display device (100) attachable at an attachment point (104) behind a steering wheel (102) of a vehicle, the display device is configured to break at a predetermined break portion (106) to thereby detach a main body (108) of the display device from the attachment point in the event that a steering column (110) attached to the steering wheel is displaced further than a predetermined distance (112), **characterized in that**
the display device is attachable to the steering column (110) or a steering module (802) via the predetermined break portion.

2. The display device according to claim 1, wherein the display device comprises an attachment portion (113) configured to attach the main body of the display device to the attachment point in such a way that the display device is fixed in relation to the steering column.

3. The display device according to any one of the preceding claims, wherein the display device is adapted to break at the predetermined break portion as a result of the display device colliding with a stoppage member (116;216) arranged behind the display device such that the stoppage member hits the back side (118) of the display device.

4. The display device according to claim 3, wherein the stoppage member is arranged to collide with the display device at a predetermined hit area to ensure the breakage at the predetermined break portion.

5. The display device according to any one of claims 3 and 4, wherein the stoppage member is the instrument panel of the vehicle.

6. The display device according to any one of the preceding claims, wherein the display device is adapted to be attached to the steering column of the vehicle.

7. The display device according to any one of the preceding claims, wherein after breakage, the main body of the display device is prevented from reaching a driver position by motion limitation means (125).

8. The display device according to claim 7, wherein the motion limitation means is a strap attached to the main body of the display device.

9. The display device according to any one of the preceding claims, wherein the displacement of the steering column is a ride down motion.

10. The display device according to any one of the preceding claims, wherein the predetermined break portion is a structurally weakened portion of the display device.

## Patentansprüche

1. Anzeigevorrichtung (100), die an einem Befestigungspunkt (104) hinter einem Lenkrad (102) eines Fahrzeugs befestigbar ist, wobei die Anzeigevorrichtung dazu ausgestaltet ist, an einem vorbestimmten Bruchabschnitt (106) zu brechen, um dadurch einen Hauptkörper (108) der Anzeigevorrichtung von dem Befestigungspunkt in dem Fall zu lösen, dass eine an dem Lenkrad befestigte Lenksäule (110) weiter als eine vorbestimmte Distanz (112) verschoben wird, **dadurch gekennzeichnet, dass**
die Anzeigevorrichtung an der Lenksäule (110) oder einem Lenkmodul (802) über den vorbestimmten Bruchabschnitt befestigbar ist.

2. Anzeigevorrichtung nach Anspruch 1, wobei die Anzeigevorrichtung einen Befestigungsabschnitt (113) umfasst, der dazu ausgestaltet ist, den Hauptkörper der Anzeigevorrichtung an dem Befestigungspunkt derart zu befestigen, dass die Anzeigevorrichtung in Relation zu der Lenksäule fixiert ist.

3. Anzeigevorrichtung nach einem der vorhergehenden Ansprüche, wobei die Anzeigevorrichtung dazu ausgelegt ist, an dem vorbestimmten Bruchabschnitt infolgedessen zu brechen, dass die Anzeigevorrichtung mit einem Anschlagelement (116; 216) kollidiert, das hinter der Anzeigevorrichtung so angeordnet ist, dass das Anschlagelement auf die Rückseite (118) der Anzeigevorrichtung auftrifft.

4. Anzeigevorrichtung nach Anspruch 3, wobei das Anschlagelement so angeordnet ist, dass es mit der Anzeigevorrichtung an einem vorbestimmten Auftreffbereich kollidiert, um den Bruch an dem vorbestimmten Bruchabschnitt sicherzustellen.

5. Anzeigevorrichtung nach einem der Ansprüche 3 und 4, wobei das Anschlagelement das Armaturenbrett des Fahrzeugs ist.

6. Anzeigevorrichtung nach einem der vorhergehenden Ansprüche, wobei die Anzeigevorrichtung dazu ausgelegt ist, an der Lenksäule des Fahrzeugs befestigt zu sein.

7. Anzeigevorrichtung nach einem der vorhergehenden Ansprüche, wobei nach einem Bruch der Hauptkörper der Anzeigevorrichtung durch ein Bewegungsbegrenzungsmittel (125) daran gehindert wird, eine Fahrerposition zu erreichen.

8. Anzeigevorrichtung nach Anspruch 7, wobei das Bewegungsbegrenzungsmittel ein Gurt ist, der an dem Hauptkörper der Anzeigevorrichtung befestigt ist.

9. Anzeigevorrichtung nach einem der vorhergehenden Ansprüche, wobei die Verschiebung der Lenksäule eine Gleitbewegung nach unten ist.

10. Anzeigevorrichtung nach einem der vorhergehenden Ansprüche, wobei der vorbestimmte Bruchabschnitt ein strukturell geschwächter Abschnitt der Anzeigevorrichtung ist.

## Revendications

1. Dispositif d'affichage (100) attachable à un point d'attache (104) derrière un volant de direction (102) d'un véhicule, le dispositif d'affichage étant configuré pour se rompre au niveau d'une partie de rupture prédéterminée (106) pour ainsi détacher un corps principal (108) du dispositif d'affichage du point d'attache dans le cas où une colonne de direction (110) attachée au volant de direction se déplace davantage que d'une distance prédéterminée (112),
le dispositif d'affichage étant **caractérisé en ce qu'**il est attachable à la colonne de direction (110) ou à un module de direction (802) par le biais de la partie de rupture prédéterminée.

2. Dispositif d'affichage selon la revendication 1, le dispositif d'affichage comprenant une partie d'attache (113) configurée pour attacher le corps principal du dispositif d'affichage au point d'attache de telle manière que le dispositif d'affichage soit fixe par rapport à la colonne de direction.

3. Dispositif d'affichage selon l'une quelconque des revendications précédentes, le dispositif d'affichage étant adapté à se rompre au niveau de la partie de rupture prédéterminée suite à la collision du dispositif d'affichage avec un élément de butée (116 ; 216) agencé derrière le dispositif d'affichage de telle sorte que l'élément de butée vienne frapper le dos (118) du dispositif d'affichage.

4. Dispositif d'affichage selon la revendication 3, dans lequel l'élément de butée est agencé de manière à entrer en collision avec le dispositif d'affichage au niveau d'une zone de frappe prédéterminée pour garantir la rupture au niveau de la partie de rupture prédéterminée.

5. Dispositif d'affichage selon l'une quelconque des revendications 3 et 4, dans lequel l'élément de butée est le tableau de bord du véhicule.

6. Dispositif d'affichage selon l'une quelconque des revendications précédentes, le dispositif d'affichage étant adapté à être attaché à la colonne de direction du véhicule.

7. Dispositif d'affichage selon l'une quelconque des revendications précédentes, dans lequel, après la rupture, le corps principal du dispositif d'affichage se trouve empêché d'atteindre une position de conducteur grâce à un moyen de limitation de mouvement (125).

8. Dispositif d'affichage selon la revendication 7, dans lequel le moyen de limitation de mouvement est une bande attachée au corps principal du dispositif d'affichage.

9. Dispositif d'affichage selon l'une quelconque des revendications précédentes, dans lequel le déplacement de la colonne de direction prend la forme d'un mouvement de rétraction.

10. Dispositif d'affichage selon l'une quelconque des revendications précédentes, dans lequel la partie de rupture prédéterminée est une partie structuralement affaiblie du dispositif d'affichage.
